Europäisches Patentamt

European Patent Office

Office européen des brevets

(19)

(11) Veröffentlichungsnummer: **0 241 747 B1**

(12) **EUROPÄISCHE PATENTSCHRIFT**

(45) Veröffentlichungstag der Patentschrift: **08.01.92**

(21) Anmeldenummer: **87104045.7**

(22) Anmeldetag: **19.03.87**

(51) Int. Cl.⁵: **A01B 63/111**

(54) **Elektrohydraulische Hubwerks-Regeleinrichtung.**

(30) Priorität: **16.04.86 DE 3612764**

(43) Veröffentlichungstag der Anmeldung:
**21.10.87 Patentblatt 87/43**

(45) Bekanntmachung des Hinweises auf die
Patenterteilung:
**08.01.92 Patentblatt 92/02**

(84) Benannte Vertragsstaaten:
**DE FR GB IT**

(56) Entgegenhaltungen:
**EP-A- 0 092 025      DE-A- 2 508 620**
**DE-A- 2 647 077      DE-A- 3 004 592**
**DE-A- 3 230 330      FR-A- 2 482 326**
**US-A- 3 913 680**

(73) Patentinhaber: **ROBERT BOSCH GMBH**
**Postfach 50**
**W-7000 Stuttgart 1(DE)**

(72) Erfinder: **Höfer, Friedrich-Wilhelm, Dipl.-Ing.**
**Georg-Friedrich-Händel-Weg 6**
**W-7257 Ditzingen 5(DE)**

## Beschreibung

Stand der Technik

Die Erfindung geht aus von einer elektrohydraulischen Einrichtung zum Regeln eines Hubwerks an einem landwirtschaftlichen Arbeitsfahrzeug nach der Gattung des Hautanspruchs. Es ist schon eine solche Einrichtung aus der DE-OS 25 08 620 bekannt, bei der die Regelgrößen Lage, hydraulischer Druck im Kraftheber, Motordrehzahl und Schlupf kombiniert verarbeitet werden, um auf diese Weise bei vielseitigen Einsatzfällen des Traktors eine elastische und geschwinde Arbeitsweise der Regeleinrichtung zu erreichen. Für die beiden Hauptregelgrößen Lage und Druck werden mit Hilfe von zwei Sollwertgebern jeweils getrennt voneinander die Regalabweichungen ermittelt und über einen Schalter einer nichtlinearen Einheit mit Totzone eingegeben, deren Ausgangssignal erst mit dem schlupfabhängigen Signal verknüpft wird. Bei dieser Einrichtung können somit auch die Regelgrößen Lage und Schlupf miteinander kombiniert werden, was in bestimmten Anwendungsfällen unerwünscht ist. Da ferner der Schlupfeinfluß über ein nichtlineares Glied der Regelung zugeführt wird, unterliegt er einer Begrenzung, so daß der Schlupfeinfluß nur in einem gewissen Bereich wirksam werden kann. Auch ist sein Einfluß auf den Regelkreis konstant, wenn der zugehörige Schalter geschlossen ist. Weiterhin ist von Nachteil, daß bei einer Verwendung des Hydraulikdruckes als Hauptregelgröße sich relativ starke Verfälschungen ergeben können. So wird der hydraulische Druck im Kraftheber beispielsweise von der Lage und von der Reibung im Hubwerks-Gestänge störend beeinflußt. Die bekannte Regeleinrichtung baut relativ aufwendig und eignet sich in dieser Form nicht zur gleichzeitigen Betätigung eines Front- und eines Heck-Hubwerks am gleichen Arbeitsfahrzeug.

Ferner ist aus der US-PS 3 913 680 eine elektrohydraulische Hubwerks-Regeleinrichtung für einen Traktor bekannt, mit der durch Heben bzw. Senken des angelenkten Pfluges der Schlupf des Traktors innerhalb einer optimalen Bandbreite geregelt werden soll. Diese Regeleinrichtung baut zwar einfach, arbeitet aber insofern relativ ungenau, als hier die Achslast der angetriebenen Hinterachse nicht ermittelt wird, was sich nachteilig auf den Wirkungsgrad dieser Regeleinrichtung auswirkt. Zudem weist der Traktor hier lediglich ein heckseitiges Hubwerk auf.

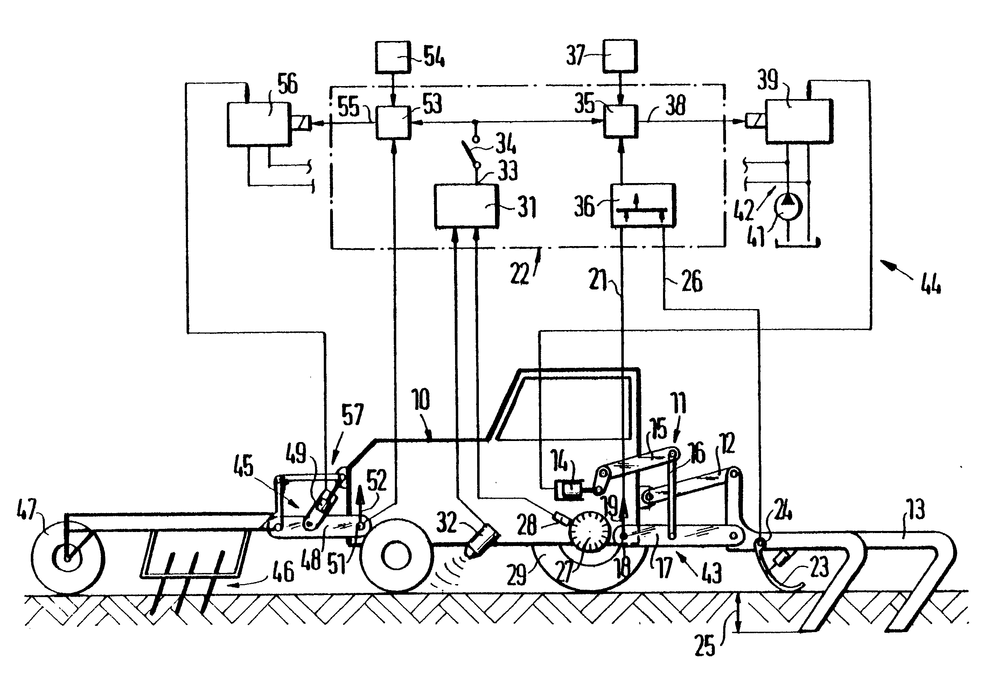

Weiterhin ist aus der DE-OS 32 30 330, Figur 10 eine elektrohydraulische Hubwerks-Regeleinrichtung bekannt, die an einem Traktor ein heckseitiges und ein frontseitiges Hubwerk aufweist. Die Hubwerke arbeiten in zwei voneinander getrennten Regelsystemen, in denen als Regelgrößen jeweils die Lage, die Zugkraft und die Arbeitstiefe benutzt werden. Über die Tiefenregelung mit Hilfe eines Stützrads kann dabei eine Raddruckverstärkung am Traktor erzielt werden. Nachteilig bei dieser Regeleinrichtung ist, daß hier keine schlupfabhängigen Signale als Regelgröße verarbeitet werden und daß für die beiden Hubwerke zwei vollkommen voneinander getrennte Regelsysteme erforderlich sind. Die Regeleinrichtung baut aufwendig, zumal zur Kraftmessung mechanische Federn als Sensoren verwendet werden.

Vorteile der Erfindung

Die erfindungsgemäße elektrohydraulische Einrichtung zum Regeln eines Hubwerks an einem landwirtschaftlichen Arbeitsfahrzeug mit den kennzeichnenden Merkmalen des Hauptanspruchs hat demgegenüber den Vorteil, daß sie bei geringem Aufwand eine relativ genaue Hubwerksregelung ermöglicht. So ermöglicht die Vertikalkraftkomponente genaue Rückschlüsse auf die jeweilige Achsbelastung am Traktor, so daß der Einfluß dieser Größe in Kombination mit einer Schlupfregelung eine vorteilhaft arbeitende Regeleinrichtung ermöglicht, die zudem einen guten Wirkungsgrad verspricht. Das Anwendungsgebiet für Schlupfregelung läßt sich dadurch erheblich erweitern, da sie nun bei Anbaugeräten verwendet werden kann, die primär nach der Hubkraft geregelt werden. Ein Raddruckverstärkung mit genauer Steuerung der Gewichtsübertragung vom Anbaugerät auf den Traktor führt zudem zu einer Leistungserhöhung des Traktors. So kann beispielsweise beim kontinuierlichen Verändern einer Anhängemasse, wie dies z.B. beim Entleeren eines Jauchewagens der Fall ist, über die Abhängigkeit zwischen Anhängemasse und Schlupf die Belastung der Antriebsachse zusätzlich durch die Regelung der Vertikalkraftkomponente angepaßt werden. Zudem ist diese Einrichtung für Heck- und Fronthubwerke einsetzbar.

Durch die in den Unteransprüchen aufgeführten Maßnahmen sind vorteilhafte Weiterbildungen und Verbesserungen der im Hauptanspruch angegebenen Einrichtung möglich. Besonders vorteilhaft ist eine Ausbildung nach Anspruch 2, wenn die Vertikalkraftkomponente der Hubkraft über einen Kraftmeßbolzen ermittelt wird. Dies ermöglicht eine besonders einfache, kompakte und robuste Einrichtung. Zweckmäßig ist ferner eine Ausbildung nach Anspruch 3, wenn dadurch die am Fronthubwerk angebauten Geräte in die Regelung mit einbezogen werden. Durch die Verwendung der schlupfabhängigen Signale für beide Regelsysteme läßt sich dabei der Aufwand minimal halten. Vorteilhaft ist ferner, wenn gemäß Anspruch 4 auch das Fronthubwerk über einen Kraftmeßbolzen angelenkt wird und dieser in entsprechender Weise wie beim Heckhubwerk die Vertikalkraftkomponente ermittelt. Die Verwendung gleicher Sensoren im Front- und Heck-Hubwerk verrringert den Aufwand und führt zu einer billigen Regeleinrichtung. Weitere vorteilhafte Ausgestaltungen ergeben sich aus den übrigen Ansprüchen, der Beschreibung sowie der Zeichnung.

Zeichnung

Ein Ausführungsbeispiel der Erfindung ist in der Zeichnung dargestellt und in der nachfolgenden Beschreibung näher erläutert. Die einzige Figur zeigt in vereinfachter Darstellung einen Traktor mit einer erfindungsgemäßen elektrohydraulischen Einrichtung zum Regeln eines heckseitigen und eines frontseitigen Hubwerks.

Beschreibung des Ausführungsbeispiels

In der einzigen Figur ist als landwirtschaftliches Arbeitsfahrzeug ein Traktor 10 dargestellt, an dessem heckseitigen, ersten Hubwerk 11 mit einem üblichen Dreipunktgestänge 12 ein erster Pflug 13 angelenkt ist. Zum Betätigen des Hubwerks 11 ist ein hydraulischer Kraftheber 14 vorgesehen, der über einen abgewinkelten Hubarm 15 und eine Hubstange 16 an einem Unterlenker 17 des Dreipunktgestänges 12 angreift. Der Unterlenker 17 ist über einen Kraftmeßbolzen 18 am Rahmen des Traktors 10 gelagert. Die Bauart des Kraftmeßbolzens 18 ist an sich bekannt z.B. aus der DE-OS 30 04 592. Der Kraftmeßbolzen 18 mißt in der Anlenkstelle des Unterlenkers 17 eine Vertikalkraftkomponente 19, die vom Unterlenker 17 über den Kraftmeßbolzen 18 auf den Traktor 10 ausgeübt wird, und erzeugt ein zur Größe dieser Kraft proportionales elektrisches Ausgangssignal, welches über die Leitung 21 an eine elektronische Steuereinrichtung 22 weitergegeben wird.

Am Pflug 3 ist ferner ein mit einem Taster 23 verbundener Tastsensor 24 angeordnet, der die Arbeitstiefe 25 des Pfluges 13 mißt und dementsprechend proportionale Signale über eine zweite elektrische Leitung 26 an die elektronische Steuereinrichtung 22 meldet.

Auf dem Traktor 10 ist ferner zur Ermittlung der schlupfabhängigen Signale an der Hinterachse 27 ein erster Drehzahlsensor 28 angeornet. Dieser Drehzahlsensor 28 mißt die Antriebsgeschwindigkeit des schlupfbehafteten Hinterrades 29 und meldet entsprechende elektrische Signale an eine elektronische Steuerschaltung 31 in der elektronischen Steuereinrichtung 22. Die absolute Geschwindigkeit des Traktors 10 über dem Grund wird von einem Radarsensor 32 erfaßt, der seine elektrischen Signale an die Steuerschaltung 31 weitergibt, welche aus den eingegangenen Steuersignalen die Regelgröße Schlupf ermittelt und diese Größe an seinem Ausgang 33 zur Verfügung stellt.

Die von der Steuerschaltung 31 ermittelte Ausgangsgröße Schlupf wird über einen Schalter 34 einem ersten elektronischen Steuergerät 35 eingegeben, das zugleich das Ausgangssignal von einer elektrischen Mischvorrichtung 36 erhält. In der Mischvorrichtung 36 können die eingegebenen Signale vom Kraftmeßbolzen 18 für die Vertikalkraftkomponente 19 sowie vom Tastsensor 24 für die Arbeitstiefe 25 in beliebigem Verhältnis zueinander gemischt werden. Das erste Steuergerät 35 steht ferner mit einem ersten Sollwertgeber 37 in Wirkverbindung. Im ersten elektronischen Steuergerät 35 wird abhängig von den eingegebenen Regelgrößen Schlupf und Vertikalkraft bzw. Arbeitstiefe und abhängig von dem vorgegebenen Sollwert am Ausgang 38 ein Steuersignal erzeugt, mit dem das elektromagnetisch betätigte Regelwegeventil 39 angesteuert wird. Das erste Regelwegeventil 39 ist zur Steuerung des Krafthebers 14 an diesen angeschlossen und liegt zusammen mit einer Pumpe 41 in einem hydraulischen Kreis 42.

Das heckseitige Hubwerk 11 mit seinem zugeordneten Kraftheber 14, den Sensoren 18, 24, 28, 32, sowie Teilen der elektronischen Steuereinrichtung 22 und das erste Regelwegeventil 39 bilden somit Teile eines ersten Regelsystems 43 in der elektrohydraulischen Hubwerks--Regeleinrichtung 44.

Am Traktor 10 ist frontseitig mit Hilfe eines zweiten Hubwerks 45 ein zweiter Pflug 46 angelenkt. Der zweite Pflug 46 ist einerseits über ein Stützrad 47 am Boden und andererseits über ein Gestänge mit einem Lenker 48 am Rahmen des Traktors 10 abgestützt. Seine Höhenlage ist durch einen zweiten hydraulischen Kraftheber 49 verstellbar. Der Lenker 48 ist mit Hilfe eines zweiten Kraftmeßbolzens 51 am Traktor 10 gelagert und ermittelt aus den in der Anlenkstelle wirksamen Kräfte eine Vertikalkraftkomponente 52. Die Meßsignale des zweiten Kraftmeßbolzens 51 werden einem zweiten elektronischen Steuergerät 53 in der elektronischen Steuereinrichtung 22 gemeldet, das zugleich auch über den Schalter 34 mit dem Schlupfsignal versorgt wird. Ferner steht das zweite Steuergerät 53 mit einem zweiten Sollwertgeber 54 in Verbindung. Aus den eingegebenen Ist- und Sollwerten ermittelt das zweite Steuergerät 53 ein Ausgangssignal 55 zur Ansteuerung eines zweiten Regelwegeventils 56. Das zweite Regelwegeventil 56 wird aus dem hydraulischen Kreis 42 mit Druckmittel versorgt und steuert den zweiten Kraftheber 49. Das zweite Hubwerk 45 mit seinem Kraftheber 49, dem zweiten Kraftmeßbolzen 51, Teilen der elektronischen Steuereinrichtung 22 und das zweite Regelwegeventil 56 stellen somit Teile eines zweiten Regelsystems 57 dar, dem zugleich auch Teile aus dem ersten Regelsystem 43 zugeordnet sind.

Die Wirkungsweise der elektrohydraulischen Hubwerks-Regeleinrichtung 44 wird wie folgt erläutert, wobei die grundsätzliche Funktion einer solchen Regeleinrichtung als an sich bekannt vorausgesetzt wird.

Zuerst soll auf die Funktion des ersten Regelsystem 43 für das heckseitige Hubwerk 11 eingegangen werden. Dabei sei davon ausgegangen, daß aus dem geschwindigkeitsabhängigen Signalen des Drehzahlsensors 28 und des Radarsensors 32 in der Steuerschaltung 31 der zugehörige Schlupf des Traktors 10 errechnet wird und dieses Schlupfsignal über den geschlossenen Schalter 34 dem ersten elektronischen Steuergerät 35 eingegeben wird. Ferner sei davon ausgegangen, daß die Mischvorrichtung 36 die von dem Tastsensor 24 gemeldeten Signale für die Arbeitstiefe 25 ausblendet und nur die Ausgangssignale des ersten Kraftmeßbolzens 18 für die dort wirksame Vertikalkraftkomponente 19 an das erste Steuergerät 35 meldet. Am ersten Steuergerät 35 werden die beiden Regelgrößen Schlupf und Vertikalkraft im einfachsten Fall linear miteinander verknüpft und das daraus resultierende Signal mit dem Sollwert vom ersten Sollwertgeber 37 verglichen. Bei einer daraus sich ergebenden Regelabweichung steuert das erste Regelwegeventil 39 den ersten Kraftheber 14 in einer Weise, daß diese Regelabweichung zu Null wird. Dabei kann eine Bedienungsperson nun so verfahren, daß sie mit dem Sollwertgeber 37 eine bestimmte Bandbreite für optimale Schlupfwerte vorgibt. Wird nun der eingestellte Grenzschlupfwert nach oben hin überschritten, so arbeitet das erste Regelsystem 43 in der Weise, daß entsprechend der Schlupfzunahme die Vertikalkraftkomponente 19 im Hubwerk 11 stetig erhöht wird. Durch dieses Ausheben des Pfluges 13 wird ein zunehmender Gewichtsanteil vom Pflug 13 auf die angetrieben Hinterachse 27 des Traktors 10 übertragen, so daß ein Durchrutschen des Hinterrades 29 und damit dessen Schlupf verringert wird. Umgekehrt kann bei Unterschreiten eines vorgegebenen Schlupfwertes durch Senken den Pfluges 13 die Vertikalkraft 19 entsprechend verringert werden, um somit wieder ein Fahren des Traktors 10 im optimalen Schlupfbereich zu erreichen.

Durch die gegenseitige Einflußnahme der Regelgrößen Schlupf und Vertikalkraft 19 kann der Pflug 13 so geregelt werden, daß der Traktor 10 mit hohem Wirkungsgrad arbeitet. Sofern bei ungünstigen Betriebsbedingungen das erste Regelsystem 43 im Betrieb zu Schwingungen neigen sollte, kann über die Mischvorrichtung 36 ein stabilisierender Einfluß der Signale vom Tastsensor 24 eingeführt werden. In ungünstigen Fällen kann es dazu führen, daß über die Mischvorrichtung 36 der Einfluß der Vertikalkraft 19 ausgeblendet und nur die Regelung der Arbeitstiefe 25 wirksam wird. Eine Stabilisierung des ersten Regelsystems 43 kann gegebenenfalls auch dadurch vorgenommen werden, daß in der elektronischen Steuereinrichtung 22 die Änderungsgeschwindigkeit der Vertikalkraft 19 und/oder der Arbeitstiefe 25 ermittelt und zur Stabilisierung des Regelkreises herangezogen werden.

Das zweite Regelsystem 57 für das frontseitige Hubwerk 45 arbeitet weitgehend entsprechend wie das erste Regelsystem 43. Da der zweite Pflug 46 über ein Stützrad 47 auf dem Boden aufliegt, kann bei ihm nur ein entsprechend kleinerer Gewichtsanteil auf den Traktor 10 übertragen werden. Der hier auf Schub beanspruchte, zweite Kraftmeßbolzen 51 ist so ausgebildet und angeordnet, daß er in seiner Lagerstelle nur die Vertikalkraft 52 ermittelt und dazu proportionale Signale an das zweite Steuergerät 53 meldet. Das zweite Steuergerät 53 wird in entsprechender Weise mit den Sollwerten von zweiten Sollwertgeber 54 und zugleich mit dem aus dem ersten Regelsystem 43 bereits vorhandenen Schlupfsignal von der Steuerschaltung 31 versorgt. Das den zweiten Kraftheber 49 steuernde Regelwegeventil 56 liegt parallel zum ersten Regelwegeventil 39 und wird somit gleichzeitig von der Pumpe 41 mit Druckmittel versorgt. Das zweite Regelsystem 57 kann nun in entsprechender Weise wie das erste Regelsystem 43 in einer kombinierten Schlupf-Vertikalkraftregelung betrieben werden, wobei lediglich ein der Arbeitstiefe 25 entsprechender Einfluß fehlt. Darüber hinaus läßt sich das zweite Regelsystem 57 auch so betreiben, daß die Regelgröße Schlupf im zweiten elektronischen Steuergerät 55 vollkommen ausgeschaltet wird und das frontseitige Hubwerk 45 nur hinsichtlich der Vertikalkraft 52 geregelt wird.

Bei der vorliegenden Hubwerks-Regeleinrichtung 44 kann somit in vorteilhafter Weise in einem Hubwerk 11, 45 die jeweilige Vertikalkraftkomponente 19, 52 zur Verringerung der Schlupfwerte an der angetriebenen Hinterachse 27 des Traktors 10 herangezogen werden. Dadurch ergibt sich eine einfache, robuste und mit hohem Wirkungsgrad arbeitende Regeleinrichtung 44, die der Schlupfregelung erweiterte Anwendungsgebiete auf Arbeitsgeräte erschließt, die primär nach der Hubkraft bzw. nach der Arbeitstiefe geregelt werden. Die Regelung eines Fronthubwerks kann hierbei in besonders einfacher und vorteilhafter Weise mit einbezogen werden, wobei insbesondere der Aufwand an teueren Sensoren in Grenzen gehalten wird. Mit der vorgeschlagenen Regeleinrichtung kann in besonders günstiger Weise aus ein mit Stützrad versehenes Anbaugerät zur Raddruckverstärkung und damit zur Triebkrafterhöhung herangezogen werden. Dies ist besonders vorteilhaft, wenn sich wie bei einem zu entleerenden Jauchewagen die Anhängemässe kontinuierlich ändert und nun über die Abhängigkeit zwischen Anhängemasse und Schlupf die Triebachslast zusätzlich durch Regelung der Vertikalkraftkomponente angepaßt wird.

Selbstverständlich sind an der gezeigten Ausführungsform Änderungen möglich, ohne vom Gedanken der Erfindung abzuweichen. Obgleich die Messung der Vertikalkraftkomponente durch die aufgezeigten Kraftmeßbolzen besonders vorteilhaft ist, kann deren Messung auch in einem anderen von der Hubkraft beanspruchten Bauteil erfolgen. Selbstverständlich kann anstelle der vereinfachten Darstellung jedem der heckseitigen oder frontseitigen Unterlenker ein Kraftmeßbolzen zugeordnet werden deren Ausgangssignale zur weiteren Verarbeitung gemittelt werden. Die aufgezeigte Regeleinrichtung 44 läßt sich zudem auch bei einer im Fahrzeug bereits installierten Schlupf-Zugkraft-Regeleinrichtung nachträglich anschließen. In einem solchen Fall wird der bei einer solchen Regeleinrichtung vorhandene Extern-Eingang benutzt und bei Regelgröße Zugkraft automatisch oder über einen Systemwahlschalter abgeschaltet.

Natürlich ist es möglich, anstelle zweier Regelwegeventile für Heck- und Fronthubwerk ein gemeinsames Regelwegeventil und ein entsprechendes Zuteilventil für die beiden Hubwerke vorzusehen. Auch kann anstelle der gezeigten Parallelschaltung der Regelventile eine Reihenschaltung gewählt werden, wobei das erste Regelventil zugleich als Stromregler arbeitet und einen Restölstrom dem zweiten Regelventil zuleitet. Ferner läßt sich in der Mischvorrichtung 36 auch das Signal eines Lagesensors, sofern ein solcher vorhanden ist, zur Stabilisierung gegen Schwingungen verarbeiten. Selbstverständlich ist die Erfindung nicht begrenzt auf die gezeigten Pflugregelungen, sondern auch auf Hubwerke mit anderen Arbeitsgeräten anwendbar.

**Patentansprüche**

1. Elektrohydraulische Einrichtung (44) zum Regeln eines Hubwerks (11; 45) an einem landwirtschaftlichen Arbeitsfahrzeug, insbesondere eines an einem Traktor (10) angelenkten Pfluges (13; 46), mit einem Regelsystem (43; 57) zum Beeinflussen der Lage des Hubwerks (11; 45), wozu im Regelsystem mindestens ein Sollwertgeber (37;54) sowie Sensoren (18, 24, 28, 32, 52) zur Ermittlung wenigstens zweier, im Regelsystem (43; 57) zu verarbeitender Regelgrößen angeordnet sind, von deren Signalen abhängig über eine, insbesondere elektrische, Einrichtung (22) und eine hydraulische Ventileinrichtung (39, 56) ein das Hubwerk (11; 45) betätigender, hydraulischer Motor (14; 49) gesteuert wird, wobei eine der Regelgrößen aus schlupfabhängigen Signalen gebildet wird, dadurch gekennzeichnet, daß Mittel (11, 18; 45, 51) vorgesehen sind, worin zur Ermittlung der anderen Regelgröße mechanische Kräfte am Hubwerk (11; 45) benutzt werden und worin von diesen Kräften eine Vertikalkraftkomponente (19; 52) der Hubkraft zur Bildung der anderen Regelgröße dient.

2. Einrichtung nach Anspruch 1, dadurch gekennzeichnet, daß das Hubwerk (11; 45) insbesondere mit einem Unterlenker (17; 48) über einen die Vertikalkraftkomponente (19; 52) ermittelnden Kraftmeßbolzen (18; 51) am Arbeitsfahrzeug (10) angelenkt ist.

3. Einrichtung nach Anspruch 1 oder 2 mit einem heckseitig am Traktor (10) angeordneten und durch das Regelsystem (43) steuerbaren Hubwerk (11), dadurch gekennzeichnet, daß am Traktor (10) ein frontseitiges Hubwerk (45) angeordnet ist, das über ein zweites Regelsystem (57) steuerbar ist, welches die schlupfabhängigen Signale des ersten Regelsystems (43) als Regelgröße verarbeitet.

4. Einrichtung nach Anspruch 3, dadurch gekennzeichnet, daß das frontseitige Hubwerk (45) am Traktor (10) über einen Kraftmeßbolzen (51) angelenkt ist, der als zusätzliche Regelgröße für das zweite Regelsystem (57) eine Vertikalkraftkomponente (52) ermittelt.

5. Einrichtung nach einem der Ansprüche 1 bis 4 mit einem am heckseitigen Hubwerk (11) angekuppelten Anbaugerät (13), dadurch gekennzeichnet, daß ein die Arbeitstiefe (25) des Anbaugeräts (13) ermittelnder Tastsensor (24) angeordnet ist, dessen Signale im ersten Regelsystem (43) als zusätzliche Regelgröße mit verarbeitet werden.

6. Einrichtung nach einem der Ansprüche 1 bis 5, dadurch gekennzeichnet, daß Mittel (22; 36) vorgesehen sind, worin, zur Stabilisierung eines Regelsystems (43; 57), eine von einer der Regelgrößen Vertikalkraft oder Arbeitstiefe abgeleitete Größe herangezogen wird.

7. Einrichtung nach einem der Ansprüche 1 bis 6, dadurch gekennzeichnet, daß ein elektronisches Steuergerät (35; 53) angeordnet ist, das bei Überschreiten eines vorgegebenen Schlupf-Sollwertes die andere Regelgröße Vertikalkraft (19; 52) im Hubwerk (11; 45) entsprechend der Schlupfzunahme stetig erhöht.

8. Einrichtung nach einem oder mehreren der Ansprüche 1 bis 7, dadurch gekennzeichnet, daß Mittel vorgesehen sind, worin entsprechend der veränderlichen Masse eines Anbaugeräts die Regelwerte für die Vertikalkraft automatisch angepaßt werden.

## Claims

1. Electrohydraulic device (44) for controlling a lifting gear (11; 45) in an agricultural working vehicle, particularly a plough (13; 46) articulated to a tractor (10), comprising a control system (43; 57) for influencing the position of the lifting gear (11; 45), for which purpose at least one set point adjuster (37; 54) and also sensors (18, 24, 28, 32, 52) for detecting at least two controlled variables which are to be processed in the control system (43; 57) are disposed in the control system, in dependence on whose signals a hydraulic motor (14; 49) actuating the lifting gear (11; 45) is controlled by means of a device (22), particularly an electrical device, and a hydraulic valve device (39, 56), one of the controlled variables being formed from slip-dependent signals, characterised in that means (11, 18; 45, 51) are provided in which mechanical forces on the lifting gear (11; 45) are used to detect the other controlled variable, and in which of these forces a vertical force component (19; 52) of the lifting force serves to form the other controlled variable.

2. Device according to Claim 1, characterised in that the lifting gear (11; 45) is articulated, particularly by a bottom link (17; 48), to the working vehicle (10) with the aid of a dynamometer pin (18; 51) detecting the vertical force component (19; 52).

3. Device according to Claim 1 or 2, comprising a lifting gear (11) disposed at the rear on the tractor (10) and adapted to be controlled by the control system (43), characterised in that a lifting gear (45) disposed at the front is disposed on the tractor (10) and is adapted to be controlled by means of a second control system (57) which processes as controlled variable the slip-dependent signals of the first control system (43).

4. Device according to Claim 3, characterised in that the lifting gear (45) disposed at the front is articulated on the tractor (10) by means of a dynamometer pin (51) which detects a vertical force component (52) as additional controlled variable for the second control system (57).

5. Device according to one of Claims 1 to 4, comprising a mounted implement (13) coupled to the lifting gear (11) disposed at the rear, characterised in that a probe sensor (24) detecting the working depth (25) of the mounted implement (13) is provided whose signals are also processed as additional controlled variable in the first control system (43).

6. Device according to one of Claims 1 to 5, characterised in that means (22; 36) are provided in which for the purpose of stabilising a control system (43; 57) use is made of a value derived from one of the controlled variables "vertical force" or "working depth".

7. Device according to one of Claims 1 to 6, characterised in that an electronic control unit (35; 53) is provided which on the exceeding of a preset set point of slip steadily increases the other controlled variable "vertical force" (19; 52) in the lifting gear (11; 45) in accordance with the increase in slip.

8. Device according to one or more of Claims 1 to 7, characterised in that means are provided in which the controlled values for the vertical force are automatically adapted in accordance with the variable mass of a mounted implement.

## Revendications

1. Installation électrohydraulique (44) pour réguler un dispositif de levage (11, 45) d'un engin à usage agricole notamment d'une charrue (13, 46) montée de manière articulée sur un tracteur (10), avec un système de régulation (43, 57) pour influencer la position du dispositif de levage (11, 45), le système de régulation comportant au moins un générateur de valeur de consigne (37, 54) ainsi que des capteurs (18, 24, 28, 32, 52) pour déterminer au moins deux grandeurs de régulation à traiter dans le système de régulation (43, 57), dont les signaux servent à commander un moteur hydraulique (14, 49) agissant sur le dispositif de levage (11, 45) en fonction notamment d'une installation électrique (22) et d'une installation à vanne hydraulique (39, 56), l'une des grandeurs de régulation étant formée à partir de signaux dépendant du glissement, installation caractérisée par des moyens (11, 18 ; 45, 51) et pour déterminer les autres grandeurs de régulation, on utilise les forces mécaniques du dispositif de levage (11, 45) et parmi ces forces, on utilise une composante de force verticale (19, 52) de la force de levage pour former les autres grandeurs de régulation.

2. Installation selon la revendication 1, caractérisée en ce que le dispositif de levage (11, 45) est notamment articulé par l'intermédiaire d'un bras inférieur (17, 18) sur l'engin (10) par l'intermédiaire d'un goujon dynamométrique (18, 51) qui fournit la composante de la force verticale (19, 52).

3. Installation selon la revendication 1 ou 2 avec un dispositif de levage (11) prévu à l'arrière d'un tracteur (10) et commandé par le système de régulation (43), installation caractérisée en ce que le tracteur (10) est équipé d'un dispositif de levage frontal (45) qui est commandé par un second système de régulation (57) traitant une grandeur de régulation les signaux dépendant du glissement du premier système de régulation (43).

4. Installation selon la revendication 3, caractérisée en ce que le dispositif de levage (45) frontal est monté de manière articulée sur le tracteur (10) par l'intermédiaire d'un goujon dynamométrique (51) qui détermine une composante de force verticale (52) comme grandeur de réglage supplémentaire pour le second système de régulation (57).

5. Installation selon l'une des revendications 1 à 4, comportant un outil porté (13) à clé sur un dispositif de levage arrière (11), installation caractérisée par un capteur (24) déterminant la profondeur de travail (25) de l'outil porté (13) et dont les signaux sont traités comme grandeurs de régulation complémentaires dans un premier système de régulation (43).

6. Installation selon des revendications 1 à 5, caractérisée par des moyens (22, 36) pour stabiliser un système de régulation (43, 57), en utilisant une grandeur dérivée des grandeurs de régulation "force verticale" ou "profondeur de travail".

7. Installation selon des revendications 1 à 6, caractérisée par un dispositif de commande électronique (35, 53) qui lors du dépassement d'une valeur de consigne de glissement prédéterminée, augmente en permanence l'autre grandeur de la limitation "force verticale" (19, 52) dans le dispositif de levage (11, 45) en fonction de l'augmentation du glissement.

8. Installation selon une ou plusieurs des revendications 1 à 7, caractérisée par des moyens adaptant automatiquement les valeurs de régulation de la force verticale en fonction de la masse variable d'un outil monté.

EP 0 241 747 B1